# EUROPEAN PATENT SPECIFICATION

(11) **EP 3 137 339 B1**
(45) Date of publication and mention of the grant of the patent: **28.03.2018**
(21) Application number: 15723168.9
(22) Date of filing: 01.05.2015
(51) Int. Cl.: B60R 1/00, B60R 16/023

(54) **APPARATUS AND METHOD FOR PROVIDING INFORMATION WITHIN A VEHICLE**
VORRICHTUNG UND VERFAHREN ZUR BEREITSTELLUNG VON INFORMATIONEN IN EINEM FAHRZEUG
APPAREIL ET PROCÉDÉ PERMETTANT DE FOURNIR DES INFORMATIONS DANS UN VÉHICULE

(30) Priority: 01.05.2014 GB 201407710
(43) Date of publication of application: 08.03.2017
(73) Proprietor: Jaguar Land Rover Limited, Coventry, Warwickshire CV3 4LF (GB)
(72) Inventor: SKRYPCHUK, Lee, Coventry Warwickshire CV3 4LF (GB)
(74) Representative: Chang, Seon Hee
(86) International application number: PCT/EP2015/059617
(87) International publication number: WO 2015/166096

(56) References cited:
- DE-A1- 10 340 496
- FR-A1- 2 937 929
- GB-A- 2 497 627
- US-A1- 2010 253 597

## Description

### TECHNICAL FIELD

The present disclosure relates to an apparatus and method for providing information within a vehicle. In particular, but not exclusively, aspects of the invention relate to a method, to an apparatus, and to a vehicle in which information is projected onto a surface within the vehicle. Some embodiments relate to a method, to an apparatus, and to a vehicle in which obstruction information is projected onto a surface within the vehicle. Other embodiments relate to a method, to an apparatus, and to a vehicle in which a graphical user interface is projected onto a surface within the vehicle.

### BACKGROUND

It is often necessary to provide information to an occupant of a vehicle, such as the driver of a vehicle. An apparatus and method for providing such information is known from US 2010/0253597. It is further common to provide a display device within the vehicle, such as arranged in a central portion of a dashboard of the vehicle. The display device can be configured to display information to the occupant. However the size of display device is limiting for the information which can be displayed thereon and the inclusion of the display device limits a freedom of a designer with respect to the vehicle interior.

It is also often required to receive an input from an occupant of the vehicle, such as the driver but also, in some circumstances, a passenger of the vehicle. In order to limit a number of physical switches present in the vehicle it is known to display graphical controls on the display device, such as buttons, user interaction with which may be detected by a touch sensitive surface of the display. However the size of the display is limiting in the number and type of controls which may be displayed.

It is an object of embodiments of the invention to at least mitigate one or more of the problems of the prior art.

### SUMMARY OF THE INVENTION

Aspects of the invention provide an apparatus, a method and a vehicle as set out in the appended claims.

According to an aspect of the present invention there is provided a method of providing obstruction information in a vehicle, comprising receiving distance information indicative of a distance of at least a side portion of a vehicle to an obstruction, and projecting onto an interior surface of the vehicle an indication of the obstruction in relation to the vehicle. The interior surface is an opaque non-dedicated display surface of the vehicle.

Advantageously a convenient indication of the obstruction may be provided within the vehicle.
The indication may comprise an indication of the distance between the portion of the vehicle and the obstruction based on the distance information. The indication easily allows an appreciation of the distance between the vehicle and the obstruction.

The interior surface is a non-dedicated display surface of the vehicle. Advantageously the indication may be provided upon surfaces which are part of the vehicle's interior. The interior surface may be proximal to a driver of the vehicle. Advantageously, the driver may easily view the indication.

The indication of the obstruction may be projected from a projection device onto the interior surface of the vehicle.

The indication of the obstruction may be an image of a view outside the vehicle, wherein the image is provided by an outward facing camera, wherein said distance information comprises an image of a view outside the vehicle captured by a camera.

The distance information may be indicative of a distance of the obstruction from a side-portion of the vehicle. The distance from the side of the vehicle may be difficult to observe from within the vehicle. The indication may be provided for parking the vehicle adjacent to the obstruction. Advantageously, an ease of parking is improved. The obstruction may be a kerb.

The step of projecting may be performed in dependence on receiving an indication that a vehicle occupant is leaving or intends to leave the vehicle.

The indication of the obstruction may be provided for alerting an occupant of the vehicle to the position of the obstruction, prior to the occupant egressing from the vehicle. The indication of the obstruction may be provided in dependence on receiving a signal from one or more of the following vehicle systems:
(a) a door handle sensor for detecting the vehicle occupant making contact with or being in proximity to a door handle on the interior of the vehicle;
(b) a seatbelt sensor for determining when a seatbelt mechanism has been released;
(c) a vehicle ignition sensor for determining when the vehicle ignition has been switched off;
(d) a pressure sensor for monitoring the weight distribution on a vehicle seat;
(e) a camera for monitoring the position and/or movements of the vehicle occupant; and
(f) a park brake is applied.

The method may comprise receiving distance information indicative of a distance between a plurality of locations about a periphery of at least the portion of a vehicle to the obstruction, wherein the indication indicates a position of the obstruction in relation to the vehicle. The indication may be based upon distance information at a plurality of points.

The method may comprise determining an angle between the vehicle and the obstruction. Advantageously, an indication of the angle may be provided for aligning the vehicle with the obstruction.

The indication is provided in a side portion of the vehicle interior corresponding to the side-portion of the vehicle. Advantageously, the indication is provided in a position relative to the obstruction. The indication is provided on an interior portion of a door of the vehicle. The interior portion of a door is easily observed whilst manoeuvring the vehicle. Furthermore, when a vehicle occupant is about to exit the vehicle, the interior portion of a door through which they intend to exit is easily observable and there is an increased likelihood that the vehicle occupant will be made aware of the indication as it will naturally lie within their field of vision.

The indication may be provided in dependence on the position of a door of the vehicle.

The method may comprise receiving door position information indicative of a position of the door between an open and a closed position, wherein the position of a door of the vehicle is determined in dependence on receiving a signal from a door position sensor.

The method may comprise inhibiting said step of projecting in dependence on at least one of, a door lock being unlatched and a door being opened by more than a predetermined amount.

According to an aspect of the present invention there is provided a vehicle obstruction warning system, comprising one or more obstruction detection devices for outputting distance information indicative of a distance of at least a side portion of a vehicle to an obstruction, and a projection device for projecting onto an interior surface of a vehicle an indication the distance to the obstruction. The interior surface is an opaque non-dedicated display surface of the vehicle.

The system may comprise a control unit for receiving the distance information from the one or more obstruction devices and controlling the projection device to output the indication.

The control unit may be arranged to determine a position of the vehicle in relation to the obstruction and the indication is indicative of the determined position.

The system may comprise a plurality of obstruction devices each arranged to output distance information. The interior surface may be a non-dedicated display surface of the vehicle.

The system may comprise one or more obstruction devices comprising at least one camera for capturing image data indicative of a view outside the vehicle and providing said image data to the control unit.

The one or more obstruction detection devices may be arranged at a side-portion of the vehicle.

The projection device may be arranged in an upper region of the vehicle interior to downwardly project the indication onto the interior surface of the vehicle. The interior surface may be proximal to a driver of the vehicle.

According to another aspect of the present invention there is provided a method of providing a graphical user interface (GUI) within a vehicle, comprising determining a location of an occupant within a vehicle, and projecting a graphical user interface onto a portion of an interior of the vehicle based on the location. Advantageously the GUI is provided relative to the location of the occupant within the vehicle.

The determining comprises determining a location of a portion of the occupant. Advantageously the GUI may be provided relative to the portion of the occupant.

The portion may be an upper limb of the occupant. The portion may be a hand. Advantageously the GUI may be provided proximal to the portion of the occupant which will interact with the GUI.

The interior surface may be a non-dedicated display surface of the vehicle. Advantageously, the GUI may be provided in a variety of non-dedicated locations within the vehicle. The interior surface is proximal to the occupant based on the location. The GUI may be easily interacted with by the occupant. The interior surface is proximal to the portion of the occupant.

The method may comprise receiving an event and projecting the graphical user interface in response to the event. Advantageously the GUI may be provided responsive to the event.

The event may comprise one of a command received from the occupant or from a system of the vehicle. The GUI may comprise one or more graphical controls selectable by the user. The method may comprise determining a selection of one or more of the graphical controls. The determination of the selection may be based on image data received from an imaging device. The user may interact with the GUI without activating a physical control device. According to a still further aspect of the present invention there is provided a system for providing a graphical user interface (GUI) within vehicle, comprising an imaging device for imaging at least a portion of an occupant within the vehicle and determining a location of the occupant based thereon, a projection device for projecting an image onto an interior of the vehicle; and a control unit arranged to control the projection device to project a GUI onto a portion of the interior based on the location.

The determining may comprise determining a location of a portion of the occupant. The portion may be an upper limb of the occupant. The portion may be a hand.

The imaging device may be arranged to output image data and the control unit is arranged to determine the location of the occupant based on the image data.

The imaging device may be arranged to determine the location of the occupant and to output location information indicative of the location to the control unit.

The GUI may comprise one or more graphical controls selectable by the user. The control unit may be arranged to determine a selection of one or more of the graphical controls. The determination of the selection may be based on image data received from the imaging device.

The control unit may be arranged to receive information indicative of an event and to control the projection device to project the GUI in response thereto. The event may comprise one of a command received from the occupant or from a system of the vehicle.

Within the scope of this application it is expressly intended that the various aspects, embodiments, examples and alternatives set out in the preceding paragraphs, in the claims and/or in the following description and drawings, and in particular the individual features thereof, may be taken independently or in any combination.

### BRIEF DESCRIPTION OF THE DRAWINGS

Embodiments of the invention will now be described, by way of example only, with reference to the accompanying figures, in which:
Figure 1 illustrates a system according to an embodiment of the invention;
Figure 2 illustrates an obstruction indication according to an embodiment of the invention;
Figure 3 illustrates a method according to an embodiment of the invention;
Figure 4 a system according to another embodiment of the invention;
Figure 5 illustrates a graphical user interface according to an embodiment of the invention; and
Figure 6 illustrates a method according to another embodiment of the invention.

### DETAILED DESCRIPTION

An embodiment of the invention relates to a method and apparatus for indicating a position of a vehicle in relation to an obstruction. In particular, the method and apparatus is provided for displaying an indication of a position of the vehicle in relation to an elongate surface feature, such as a kerb, which is provided at a side of a roadway. As will be appreciated it is often desired to park alongside a kerb and, particularly in a vehicle which is relatively high or where the driver is sat within the vehicle in a relatively low position, it may be difficult for a driver to appreciate the position of the vehicle in relation to the kerb.

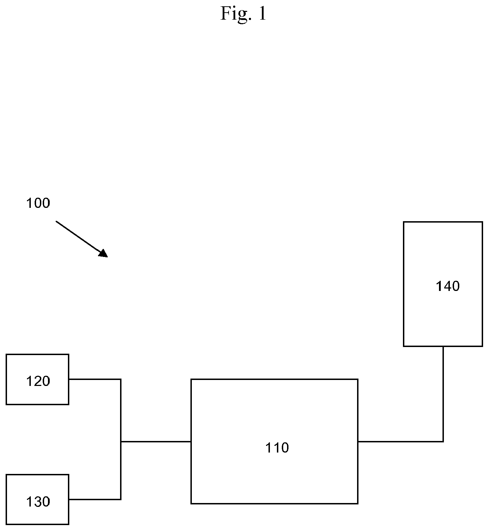

Figure 1 illustrates a system 100 according to an embodiment of the invention. The system is arranged, in use, to determine the position of an obstruction, such as a kerb, and to display an indication of the position of the vehicle in relation to the obstruction. In particular, although not exclusively, the system 100 may determine a position of an obstruction alongside the vehicle. The system 100 may be arranged to display the indication in a position of the vehicle interior appropriate to the position of the obstruction, such as displaying the indication at a side of the driver, as will be explained. The indication may be displayed upon a portion of the vehicle interior, rather than on a screen of a display device.

The system 100 comprises a control means 110, one or more obstruction detection means 120, 130 and a display means 140.

The control means 110 may be implemented as a control unit 110 comprising a processor for executing instructions. The control unit 110 is arranged to receive distance information from the one or more obstruction detection means 120, 130, as will be explained, and to control the display means 140 to display an indication of the position of the vehicle in relation to a detected obstruction.

The one or more obstruction detection means 120, 130 are arranged to, in use, detect an obstruction proximal to a vehicle in which the system 100 is operational. The obstruction detection means 120, 130 may be provided in the form of one or more obstruction detection devices 120, 130. The obstruction detection devices 120, 130 may be arranged to each detect a distance to the obstruction and to output distance information indicative thereof.

The obstruction may be a feature or object which is capable of impeding progress of the vehicle i.e. over which the vehicle cannot travel. However the obstruction may be a feature over which the vehicle is capable of travelling and in relation to which the user wishes to position the vehicle. The obstruction may be a kerb or other raised surface feature which the vehicle is capable of crossing. As it will be appreciated, a kerb may run alongside a roadway to separate the road on which vehicles travel from a pedestrian thoroughfare, such as a pavement or sidewalk. It is often desired to park alongside the kerb and in order to be satisfactory the vehicle should generally be positioned close to and parallel with the kerb, which can be difficult to achieve since the driver's view of the kerb and vehicle wheels may be limited. Therefore embodiments of the invention aim to display to the driver information which may be useful in locating the vehicle in relation to such an obstruction.

Figure 1 shows the system 100 comprises two obstruction detection devices 120, 130, however it will be realised that other numbers of obstruction detection devices may be used. The system shown in Figure 1 comprises first and second obstruction detection devices 120, 130 which are each respectively located at a side of the vehicle in relation to a portion of the vehicle. A first obstruction detection device 130 is associated with a left-hand side front wheel of the vehicle and a second obstruction detection device 120 is associated with a left-hand side rear wheel of the vehicle. It will be realised that the system may comprise one or more obstruction detection devices associated with a right-hand side of the vehicle, which are not shown in Figure 1 for simplicity. Furthermore it will be realised that the obstruction detection devices may be positioned elsewhere about the vehicle. By determining a distance to an obstruction at a plurality of points alongside the vehicle an angle of the vehicle to a linear or elongate obstruction, such as the kerb, may be determined.

Each obstruction detection device 120, 130 is arranged to determine a distance to the obstruction, such as the kerb. The obstruction detection device 120, 130 may detect the distance to the obstruction by mechanical means. However, in other embodiments the obstruction detection device 120, 130 may emit radiation and receive radiation reflected from the obstruction to determine the distance thereto. The radiation may be sound waves, such as ultrasonic radiation, or may be light, such as infrared light.

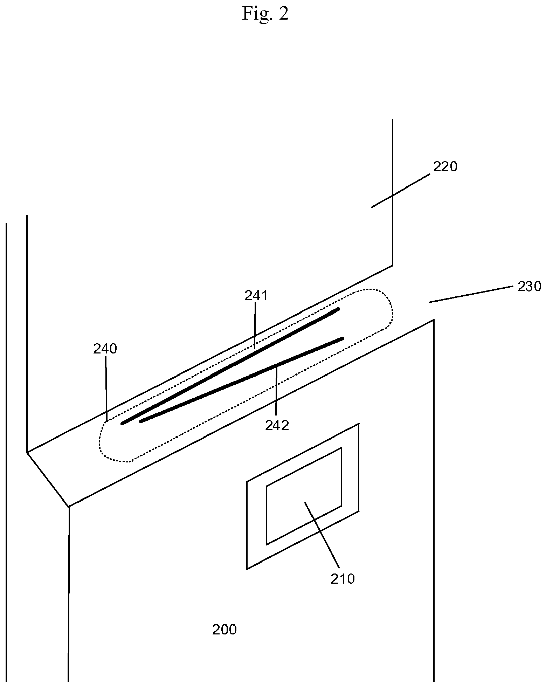

The display means 140 may be provided as a display device 140 for visually displaying information to the user or driver of the vehicle. In some embodiments of the invention the display means 140 is a projector device for projecting an image onto a display surface. The display device may comprise one or more light emitting devices, such as LEDs, arranged to emit light through one or more controllable elements such that an image is projected onto a surface. The display surface may be any surface and, in embodiments of the present invention where the projector device is arranged within a vehicle, the surface may be an interior surface of the vehicle. The surface does not need to be a dedicated surface for providing a display to the user, but may be any surface within the vehicle. As shown in Figure 2, in some embodiments of the invention the display surface is an interior surface of a door of the vehicle.

Figure 2 illustrates an interior portion of a vehicle door 200. The door comprises a handle 210 for opening the door and a window 220 which is arranged in an upper portion of the door, as will be appreciated. The door further comprises a sill 230 where a lower portion of the door ends proximal to the window 220. The sill may be a relatively flat surface although it will be realised that the sill may be curved or otherwise shaped. Embodiments of the invention are arranged to provide the indication 240 (shown within dotted lines which do not for part of the indication itself) of the position of the vehicle in relation to the obstruction on the door 200, particularly the sill 230 portion of the door in some embodiments. In this way the driver is able to appreciate the position of the vehicle in relation to the obstruction whilst viewing a mirror which may be located on an outside of the door or attempting to the view the obstruction itself. It will be realised that the indication 240 may be provided in other locations within the vehicle interior.

The indication 240 is provided on the sill 230 by the display device projecting light from a suitable portion of the vehicle interior, such as an upper portion of the vehicle interior. In an embodiment the indication comprises first and second lines 241, 242. The first line 241 may be indicative of the location of the kerb and the second line 242 indicative of the position of the vehicle in relation to the kerb. The first line 241 may be provided parallel to the door 200 i.e. parallel to the sill 230, whilst the location of the second line 242 may be varied indicative of the position of the vehicle such that the driver may more easily appreciate how to manoeuvre the vehicle parallel to the kerb. It will be realised that other representations may be provided.

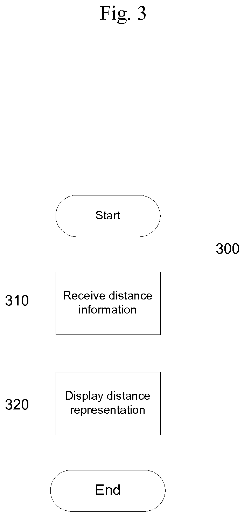

Figure 3 illustrates a method 300 according to an embodiment of the invention. The method may be performed in response to an event, such as one or more of the obstruction detection devices 120, 130 detecting the presence of an obstruction, a user-activated event such as a button press or voice command, or another event generated by a vehicle system, such as the vehicle being placed in reverse gear. The method may be performed by the control unit 110.

The method 300 comprises a step 310 of receiving distance information indicative of a distance between the vehicle and the obstruction, such as the kerb. The distance information may be received from one or more obstruction detection devices 120, 130. Each distance detection device 120, 130 may provide respective distance information to the control unit 110.

In step 320 the control unit 110 controls the display device 140 to display the indication 240 of the location of the kerb 241 and the vehicle 242 within the vehicle. The display device 140 is controlled to project the indication 240 onto a surface for viewing by the driver, and any other occupants of the vehicle. Step 320 may comprise the control unit 110 determining the angle between the representation of the kerb 241 and that of the vehicle 242.

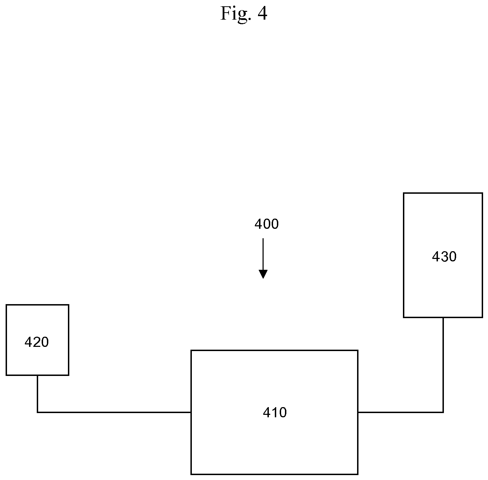

Figure 4 illustrates an apparatus 400 according to a further embodiment of the invention. The apparatus 400 is arranged, in use, to provide a user interface about a vehicle interior proximal to a user. The apparatus 400 comprises control means 410, imaging means 420 and projection means 430.

The imaging means 420 may be provided in the form of one or more imaging devices 420. Each imaging device 420 may be, for example, a CCD camera, although it will be realised that other imaging devices may be used. Further description will refer to an imaging device, although it will be realised that there may be a plurality of imaging devices. The imaging device 420 is arranged, in use, to output image data to the control means 410.

The projection means 430 may be provided in the form of one or more projection devices 430 for projecting an image onto a display surface. Each display device may comprise one or more light emitting devices, such as LEDs, arranged to emit light through one or more controllable elements such that an image is projected onto a surface. The display surface may be any surface within the vehicle i.e. the surface may be any interior surface of the vehicle. The surface does not need to be a dedicated surface for providing a display to the user. Further description will refer to a projection device, although it will be realised that the system 400 may comprise more than one projection device. In use the control means 410 is arranged to control images output by the projection device 430.

The control means 410 may be implemented as a control unit 410 comprising a processor for executing instructions. As noted above, the control unit 410 is arranged to receive image data from the imaging device 420 and to output image data to the projection device 430 for controlling the projection device 430 to output an image based thereon which is displayed on an interior surface of the vehicle.

The control unit 410 is arranged to receive the image data and to determine a location of a selected portion of at least one occupant of the vehicle. It will be realised, in some embodiments, that the imaging device 420 may be arranged to determine the location of the selected portion of the occupant and output data indicative of the location to the control unit 410. The at least one occupant may be a driver of the vehicle, although this is not limiting. In particular embodiments of the invention may determine a location of an upper limb of the occupant i.e. the occupant's arm and/or hand. The control unit 410 is arranged to determine the location in order to provide a graphical user interface (GUI) proximal to the occupant's upper limb, in particular their hand, such that the occupant is not required to substantially move their arm or hand to interact with the GUI. The control unit 410 may provide the GUI responsive to one or more predetermined events. In one embodiment the predetermined event may comprise a command from the occupant which may be a voice command or an event received from another system of the vehicle. In one embodiment the event is received from a telephone system of the vehicle responsive to an incoming call, although it will be realised that this is an example and events may be received from other systems of the vehicle.

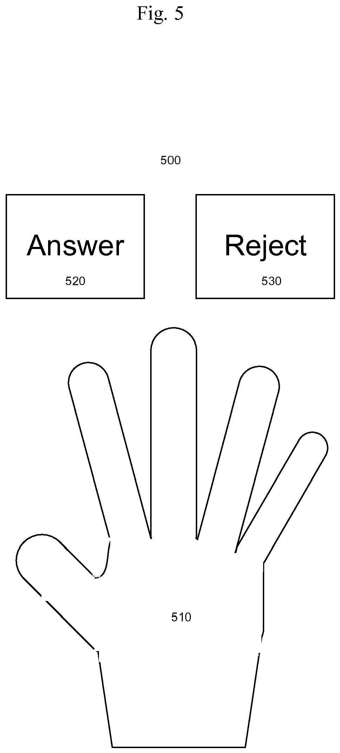

Figure 5 illustrates a GUI 500 according to an embodiment of the invention. The GUI 500 is generated in response to the event from the telephone system indicative of the incoming call. The GUI 500 comprises a plurality of visual controls which are projected onto the interior surface of the vehicle by the projection device 430. The GUI 500 illustrated in Figure 5 comprises a first control 520 for answering the incoming call and a second control 530 for rejecting the incoming call. It will be realised that other embodiments of the GUI 500 may comprise different number of controls and controls for other purposes. The GUI 500 is provided proximal to a location of the occupant's hand 510 within the vehicle in response to the event.

The occupant is able to activate a selected control 520, 530 such as the first, "answer", control 520 by moving their hand, or a portion thereof such as one or more fingers, onto the portion of the vehicle interior corresponding to the displayed control. The imaging device 420 provides image data to the control unit 410 indicative of the movement of the occupant's hand 510 to the selected control. In response to the image data the control unit 410 is arranged to provide an appropriate output, for example to the telephone system indicative of the "answer" control 510 being activated.

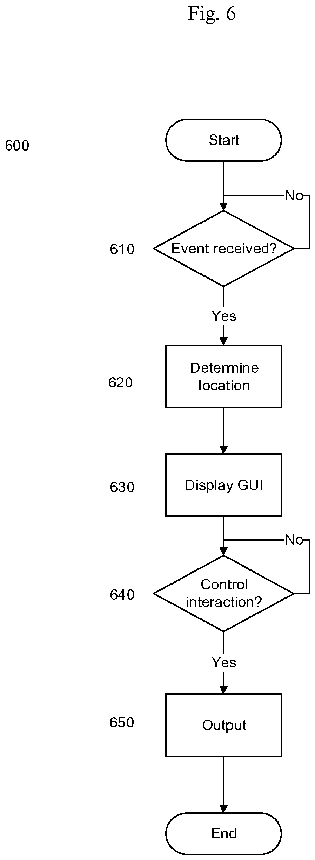

Figure 6 illustrates a method 600 according to an embodiment of the invention. The method 600 may be performed by the control unit 410 described above.

The method comprises a step 610 of determining whether an event has been received. As noted above, the event may be instigated by the occupant, such as by means of an appropriate command which may be a voice command, or may be received from another system of the vehicle, such as the telephone system described above, a navigation system of the vehicle, a communication system of the vehicle for example in response to an email being received etc. It will be realised that the event may originate from a system in addition or alternative to those described. If an event is received the method moves to step 620, otherwise the method loops in step 610 waiting for the event.

In step 620 a location of a predetermined portion of the occupant is determined. The predetermined portion may be an upper limb i.e. arm, or the hand of the occupant. For example, in step 620 the location of the occupant's hand on an arm-rest may be determined.

In step 630 the GUI 500 is displayed by projecting one or more images from the projection device 430 within the vehicle. The GUI 500 is displayed based on the location determined in step 620. The GUI 500 may be displayed a predetermined distance from the determined location. The predetermined distance may allow for a spacing between, for example the occupant's hand, and the GUI 500.

In step 640 it is determined whether the occupant has interacted with the GUI 500. The determination may be made on the basis of the control unit 410 receiving image data indicative of the user's hand corresponding to a projected position of a selected control of the GUI 500, such as the first control 520. If no determination is made in step 640 the method continues to loop or hold at step 640. If, after a predetermined period of time no determination is made the method 600 may cause the GUI 500 to be removed i.e. the control unit 410 may cause the GUI 500 to cease to be displayed. If, however, a control interaction is determined then the method moves to step 650.

In step 650 an output is provided responsive to the interaction determined in step 640. The output may be a visual output provided by the projection device 430 operated according to instructions from the control unit 410. For example the control unit may cause another portion of GUI 500 to be displayed, such as a sub-menu. Alternatively the output may be data output by the control unit 410 to another system of the vehicle, such as the telephone system. For example the data may be indicative of the "answer" control 520 having been activated.

Embodiments of the invention provide a GUI 500 which is displayed at a convenient location about the interior of a vehicle based on a location of an occupant of the vehicle, and in particular in some embodiments proximal to a location of the occupant's hand. In this way the GUI is easily accessible. Furthermore the requirement for a display device within the vehicle is reduced, possibly eliminated.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method (300) of providing obstruction information in a vehicle, comprising:
receiving (310) distance information indicative of a distance of at least a side portion of a vehicle to an obstruction; and
projecting (320) onto an interior surface of the vehicle an indication (240) of the obstruction in relation to the vehicle, wherein the interior surface is an opaque non-dedicated display surface of the vehicle and wherein the indication (240) is provided on an interior portion of a door (200) of the vehicle.

2. The method (300) of claim 1, wherein the indication (240) comprises an indication of the distance between the portion of the vehicle and the obstruction based on the distance information.

3. The method (300) of claim 1 or 2, wherein the interior surface is proximal to a driver of the vehicle.

4. The method (300) of any preceding claim, wherein the indication (240) of the obstruction is projected from a projection device (140) onto the interior surface of the vehicle.

5. The method (300) of any preceding claim, wherein the indication (240) of the obstruction is an image of a view outside the vehicle, wherein the image is provided by an outward facing camera (120, 130), wherein said distance information comprises an image of a view outside the vehicle captured by a camera (120, 130).

6. The method (300) of any preceding claim, wherein the indication is provided for parking the vehicle adjacent to the obstruction.

7. The method (300) of any preceding claim wherein the obstruction is a kerb.

8. The method (300) of any preceding claim, comprising receiving distance information indicative of a distance between a plurality of locations about a periphery of at least the portion of a vehicle to the obstruction, wherein the indication (240) indicates a position of the obstruction in relation to the vehicle, optionally the method (300) comprises determining an angle between the vehicle and the obstruction.

9. The method (300) of any preceding claim, wherein the indication (240) is provided in dependence on the position of a door (200) of the vehicle, optionally the method (300) comprises receiving door position information indicative of a position of the door (200) between an open and a closed position, wherein the position of a door (200) of the vehicle is determined in dependence on receiving a signal from a door position sensor.

10. The method (300) of any preceding claim, comprising inhibiting said step of projecting (320) in dependence on at least one of, a door lock being unlatched and a door (200) being opened by more than a predetermined amount.

11. A vehicle obstruction warning system (100), comprising:
one or more obstruction detection devices (120, 130) for outputting distance information indicative of a distance of at least a side portion of a vehicle to an obstruction; and
a projection device (140) for projecting onto an interior surface of a vehicle an indication (240) of the distance to the obstruction, wherein the interior surface is an opaque non-dedicated display surface of the vehicle and wherein the indication (240) is provided on an interior portion of a door (200) of the vehicle.

12. The system (100) of claim 11, comprising a control unit (110) for receiving the distance information from the one or more obstruction devices (120, 130) and controlling the projection device (140) to output the indication (240), optionally the control unit (110) is arranged to determine a position of the vehicle in relation to the obstruction and the indication (240) is indicative of the determined position.

13. The system (100) of claim 12, wherein said one or more obstruction devices (120, 130) comprises at least one camera for capturing image data indicative of a view outside the vehicle and providing said image data to the control unit (110).

14. A vehicle comprising the system (100) of any of claims 11 to 13.

15. The vehicle of claim 14, wherein the projection device (140) is arranged in an upper region of the vehicle interior to downwardly project the indication onto the interior surface of the vehicle, optionally wherein the interior surface is proximal to a driver of the vehicle.

## Patentansprüche

1. Verfahren (300) zum Bereitstellen von Hindernisinformationen in einem Fahrzeug, Folgendes umfassend:
Empfangen (310) von Abstandsinformationen, hinweisend auf einen Abstand wenigstens eines Seitenabschnitts eines Fahrzeugs von einem Hindernis; und
Projizieren (320) eines Hinweises (240) auf das Hindernis in Bezug auf das Fahrzeug auf eine innere Oberfläche des Fahrzeugs, wobei die innere Oberfläche eine undurchsichtige nicht zweckbestimmte Anzeigeoberfläche des Fahrzeugs ist und wobei der Hinweis (240) auf einem inneren Abschnitt einer Tür (200) des Fahrzeugs bereitgestellt wird.

2. Verfahren (300) nach Anspruch 1, wobei der Hinweis (240) einen Hinweis auf den Abstand zwischen dem Abschnitt des Fahrzeugs und dem Hindernis auf der Basis der Abstandsinformationen umfasst.

3. Verfahren (300) nach Anspruch 1 oder 2, wobei die innere Oberfläche proximal zu einem Fahrer des Fahrzeugs ist.

4. Verfahren (300) nach einem der vorhergehenden Ansprüche, wobei der Hinweis (240) auf das Hindernis von einer Projiziervorrichtung (140) auf eine innere Oberfläche des Fahrzeugs projiziert wird.

5. Verfahren (300) nach einem der vorhergehenden Ansprüche, wobei der Hinweis (240) auf das Hindernis ein Bild einer Ansicht außerhalb des Fahrzeugs ist, wobei das Bild durch eine nach außen gerichtete Kamera (120, 130) bereitgestellt wird, wobei die Abstandsinformationen ein Bild einer Ansicht außerhalb des Fahrzeugs, aufgenommen von einer Kamera (120, 130), umfassen.

6. Verfahren (300) nach einem der vorhergehenden Ansprüche, wobei der Hinweis zum Parken des Fahrzeugs neben dem Hindernis bereitgestellt wird.

7. Verfahren (300) nach einem der vorhergehenden Ansprüche, wobei das Hindernis ein Bordstein ist.

8. Verfahren (300) nach einem der vorhergehenden Ansprüche, das Empfangen von Abstandsinformationen umfassend, die hinweisend auf einen Abstand zwischen mehreren Stellen um einen Umfang wenigstens des Abschnitts eines Fahrzeugs herum von dem Hindernis sind, wobei der Hinweis (240) auf eine Position des Hindernisses in Bezug zu dem Fahrzeug hinweist, das Verfahren (300) optional das Bestimmen eines Winkels zwischen dem Fahrzeug und dem Hindernis umfasst.

9. Verfahren (300) nach einem der vorhergehenden Ansprüche, wobei der Hinweis (240) abhängig von der Position einer Tür (200) des Fahrzeugs bereitgestellt wird, optional das Verfahren (300) das Empfangen von Türpositionsinformationen, die hinweisend auf eine Position der Tür (200) zwischen einer geöffneten und einer geschlossenen Position sind, umfasst, wobei die Position einer Tür (200) des Fahrzeugs abhängig vom Empfangen eines Signals von einem Türpositionssensor bestimmt wird.

10. Verfahren (300) nach einem der vorhergehenden Ansprüche, umfassend ein Unterdrücken des Schritts des Projizierens (320) abhängig von einem Türschloss, das entriegelt wird, und/oder einer Tür (200), die um eine größere Menge als vorgegeben geöffnet wird.

11. Fahrzeughinderniswarnungssystem (100), Folgendes umfassend:
eine oder mehrere Hindernisnachweisvorrichtungen (120, 130) zum Ausgeben von Abstandsinformationen, die hinweisend auf einen Abstand wenigstens eines Seitenabschnitts eines Fahrzeugs zu einem Hindernis sind; und
eine Projiziervorrichtung (140) zum Projizieren eines Hinweises (240) auf den Abstand zu dem Hindernis auf eine innere Oberfläche eines Fahrzeugs, wobei die innere Oberfläche eine undurchsichtige nicht zweckbestimmte Anzeigeoberfläche des Fahrzeugs ist und wobei der Hinweis (240) auf einem inneren Abschnitt einer Tür (200) des Fahrzeugs bereitgestellt wird.

12. System (100) nach Anspruch 11, eine Steuerungseinheit (110) zum Empfangen der Abstandsinformationen von der einen oder der mehreren Hindernisvorrichtungen (120, 130) und Steuern der Projiziervorrichtung (140) zum Ausgeben des Hinweises (240) umfassend, wobei die Steuerungseinheit (110) optional zum Bestimmen einer Position des Fahrzeugs in Bezug zu dem Hindernis angeordnet ist und der Hinweis (240) auf die bestimmte Position hinweisend ist.

13. System (100) nach Anspruch 12, wobei die eine oder die mehreren Hindernisvorrichtungen (120, 130) wenigstens eine Kamera zum Aufnehmen von Bilddaten, die hinweisend auf eine Ansicht außerhalb des Fahrzeugs sind, und Bereitstellen der Bilddaten an die Steuerungseinheit (110) umfasst.

14. Fahrzeug, das System (100) nach einem der Ansprüche 11 bis 13 umfassend.

15. Fahrzeug nach Anspruch 14, wobei die Projiziervorrichtung (140) in einem oberen Bereich des Fahrzeuginneren angeordnet ist, um den Hinweis nach unten gerichtet auf die innere Oberfläche des Fahrzeugs zu projizieren, wobei die innere Oberfläche optional proximal zu einem Fahrer des Fahrzeugs ist.

## Revendications

1. Procédé (300) de fourniture d'informations d'obstacle dans un véhicule, comprenant les étapes suivantes :
recevoir (310) des informations de distance indiquant une distance d'au moins une partie latérale d'un véhicule par rapport à un obstacle ; et
projeter (320) sur une surface intérieure du véhicule une indication (240) de l'obstacle par rapport au véhicule, dans lequel la surface intérieure est une surface d'affichage non dédiée opaque du véhicule et dans lequel l'indication (240) est fournie sur une partie intérieure d'une portière (200) du véhicule.

2. Procédé (300) selon la revendication 1, dans lequel l'indication (240) comprend une indication de la distance entre la partie du véhicule et l'obstacle en fonction des informations de distance.

3. Procédé (300) selon la revendication 1 ou 2, dans lequel la surface intérieure est à proximité d'un conducteur du véhicule.

4. Procédé (300) selon l'une quelconque des revendications précédentes, dans lequel l'indication (240) de l'obstacle est projetée à partir d'un dispositif de projection (140) sur la surface intérieure du véhicule.

5. Procédé (300) selon l'une quelconque des revendications précédentes, dans lequel l'indication (240) de l'obstacle est une image d'une vue à l'extérieur du véhicule, dans lequel l'image est fournie par une caméra orientée vers l'extérieur (120, 130), dans lequel lesdites informations de distance comprennent une image d'une vue à l'extérieur du véhicule capturée par une caméra (120, 130).

6. Procédé (300) selon l'une quelconque des revendications précédentes, dans lequel l'indication est fournie pour garer le véhicule à côté de l'obstacle.

7. Procédé (300) selon l'une quelconque des revendications précédentes dans lequel l'obstacle est une bordure de trottoir.

8. Procédé (300) selon l'une quelconque des revendications précédentes, comprenant la réception d'informations de distance indiquant une distance entre une pluralité d'emplacements autour d'une périphérie d'au moins la partie d'un véhicule par rapport à l'obstacle, dans lequel l'indication (240) indique une position de l'obstacle par rapport au véhicule, le procédé (300) comprend facultativement la détermination d'un angle entre le véhicule et l'obstacle.

9. Procédé (300) selon l'une quelconque des revendications précédentes, dans lequel l'indication (240) est fournie en fonction de la position d'une portière (200) du véhicule, le procédé (300) comprend facultativement la réception d'informations de position de portière indiquant une position de la portière (200) entre une position ouverte et une position fermée, dans lequel la position d'une portière (200) du véhicule est déterminée en fonction d'une réception d'un signal provenant d'un capteur de position de portière.

10. Procédé (300) selon l'une quelconque des revendications précédentes, comprenant l'inhibition de ladite étape de projection (320) en fonction d'une serrure de portière déverrouillée et/ou d'une portière (200) ouverte par plus d'une valeur prédéterminée.

11. Système d'avertissement d'obstacle du véhicule (100), comprenant :
un ou plusieurs dispositifs de détection d'obstacle (120, 130) pour transmettre des informations de distance indiquant une distance d'au moins une partie latérale d'un véhicule jusqu'à un obstacle ; et
un dispositif de projection (140) pour projeter sur une surface intérieure d'un véhicule une indication (240) de la distance par rapport à l'obstacle, dans lequel la surface intérieure est une surface d'affichage non dédiée opaque du véhicule et dans lequel l'indication (240) est fournie sur une partie intérieure d'une portière (200) du véhicule.

12. Système (100) selon la revendication 11, comprenant une unité de commande (110) pour recevoir les informations de distance à partir du ou des dispositifs d'obstacle (120, 130) et pour commander le dispositif de projection (140) pour transmettre l'indication (240), l'unité de commande (110) est facultativement conçue pour déterminer une position du véhicule par rapport à l'obstacle et l'indication (240) indique la position déterminée.

13. Système (100) selon la revendication 12, dans lequel ledit ou lesdits dispositifs d'obstacle (120, 130) comprennent au moins une caméra pour capturer des données d'image indiquant une vue à l'extérieur du véhicule et fournir lesdites données d'image à l'unité de commande (110).

14. Véhicule comprenant le système (100) selon l'une quelconque des revendications 11 à 13.

15. Véhicule selon la revendication 14, dans lequel le dispositif de projection (140) est agencé dans une région supérieure de l'intérieur du véhicule pour projeter vers le bas l'indication sur la surface intérieure du véhicule, dans lequel la surface intérieure est facultativement à proximité d'un conducteur du véhicule.
